# EUROPÄISCHE PATENTSCHRIFT

(11) **EP 0 706 666 B1**
(45) Veröffentlichungstag und Bekanntmachung des Hinweises auf die Patenterteilung: **02.04.1997**
(21) Anmeldenummer: 94921637.8
(22) Anmeldetag: 30.06.1994
(51) Int. Cl.: G01S 7/02, G01S 13/86

(54) **FUNKAUFKLÄRUNGSSYSTEM**
RADIO RECONNAISSANCE SYSTEM
SYSTEME DE RECONNAISSANCE RADIO

(30) Priorität: 02.07.1993 DE 4322046
(43) Veröffentlichungstag der Anmeldung: 17.04.1996
(73) Patentinhaber: Daimler-Benz Aerospace Aktiengesellschaft, 81663 München (DE)
(72) Erfinder: KREDEL, Werner, D-89134 Blaustein (DE); SCHEIBEL, Norbert, D-89278 Nersingen (DE)
(74) Vertreter: Fröhling, Werner, Dr.
(86) Internationale Anmeldenummer: EP9402138
(87) Internationale Veröffentlichungsnummer: WO9501576

(56) Entgegenhaltungen:
- WO-A-92/18917
- FR-A- 2 632 755
- US-A- 5 122 801

## Beschreibung

Die Erfindung betrifft ein Funkaufklärungssystem gemäß Oberbegriff des Patentanspruchs 1. Ein solches System ist aus der Druckschrift WO-A-92 18917 bekannt.

Funkaufklärungssysteme bestehen aus mehreren Geräten wie z.B. Suchempfänger, Überwachungsempfänger, Abhängeempfänger, Peiler, Meß- und Analyseempfänger, Bedienplätzen usw., die je nach Funkszenario zu unterschiedlichen Gerätekonfigurationen zusammengekoppelt werden können.

Üblicherweise treten die einzelnen Empfänger in solchen Systemen meist in Funktionskombinationen auf wie z.B.:

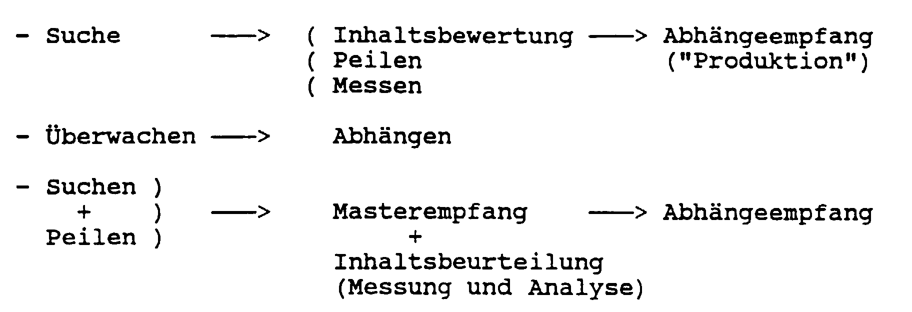

Diese Funktionskombinationen haben - diskret aus Einzelgeräten realisiert - eine große Zahl redundanter Funktionselemente ("Baugruppen"), die solche herkömmlichen Funkaufklärungssysteme unnötig verteuern.

Darüber hinaus ist eine externe Vernetzung der Signale - teilweise über mehrere Umsteigeebenen - erforderlich. Das bedeutet eine große Zahl von teuren Steckverbindungen, Kabeln und Schnittstellenschaltungen.

Die Aufgabe der Erfindung besteht darin, ein Funkaufklärungssystem zu schaffen, bei dem das Leistungs-/Aufwandsverhältnis möglichst hoch ist.

Die erfindungsgemäße Lösung ist durch die kennzeichnenden Merkmale des Patentanspruchs 1 wiedergegeben. Die übrigen Ansprüche enthalten vorteilhafte Aus- und Weiterbildungen der Erfindung.

Wesentliche Vorteile der Erfindung sind darin zu sehen, daß
- eine Reduktion der Kosten für häufig vorkommende Empfängerfunktionskombinationen möglich ist;
- eine auftragsspezifische Zuordnung der Empfängerfunktionen (dynamische Umparametrierung) möglich ist;
- eine flexible Anpassungsmöglichkeit von Aufklärungsarbeitsplätzen bzw. Systemen an wechselnde Funkszenarios gegeben ist;
- ein optimaler Hardwareeinsatz gegeben ist;
- "kurze Wege" für kritische Signale realisiert sind;
- eine auftragsbezogene Datenflußsteuerung per Software über die Nutzerschnittstelle möglich ist;
- der Einsatz eines frei programmierbaren Signalprozessors möglich ist, der jeweils für die geforderten Empfängerfunktionen parametriert werden kann;
- über eine offene Busschnittstelle die Bereitstellung der relevanten Ausgangssignale eines Empfängers zusammen mit den Kommandierungs- und Parametrierungsdaten möglich ist;
- Quellen und Senken der Nachrichteninhalte und Kommandos eines Aufklärungssystems miteinander vernetzt werden können.

Mit diesen Maßnahmen ist eine Optimierung des Leistungs/Aufwandsverhältnisses durch Erhöhung der Funktionalität bei gleichzeitiger Reduktion der Anzahl und/oder der Vielfalt der Baugruppen möglich.

Die Lösung ermöglicht ferner neben dem Einzelempfängergehäuse mit integriertem Bedienfeld auch eine standardisierte Rahmenkonstruktion, in dem mehrere Empfängermoduln in einem Gehäuse mit gemeinsamer Verdrahtungs-Rückwand kombiniert werden können. Die Verdrahtungs-Rückwand kann dabei alle relevanten Signalebenen auf busfähigen Medien führen. Dadurch können Funktionskobinationen, wie z.B.
Suchempfang - Überwachungsempfang
mit
Überwachung ( Analyse
( Inhalt
( Peilen
durch entsprechende Bestückung des Rahmens mit Empfängermoduln sowie Signal- und Datenverarbeitungseinheiten, verbunden durch ein breitbandiges Bussystem realisiert werden.

Alle Empfänger des Funktionskomplexes werden bei diesem Konzept vorzugsweise über eine gemeinsame Bedien- und Anzeigefunktion mit dem Nutzer verbunden. Die einzelnen Empfängermoduln und Analysefunktionen repräsentieren sich dort als Fenster in der Nutzeroberfläche.

Mit dieser Lösung - komplexe Funktionalität bei geringem Hardwareaufwand - können vor allem kleine und mittlere Systemlösungen vorteilhaft realisiert werden; dies gilt insbesondere für abgesetzte Überwachungsstationen mit den Funktionen
- Suchen,
- Überwachen,
- Peilen,
- Parametermessung,
für die dieses Konzept eine kompakte kostengünstige Realisierungsmöglichkeit bietet.

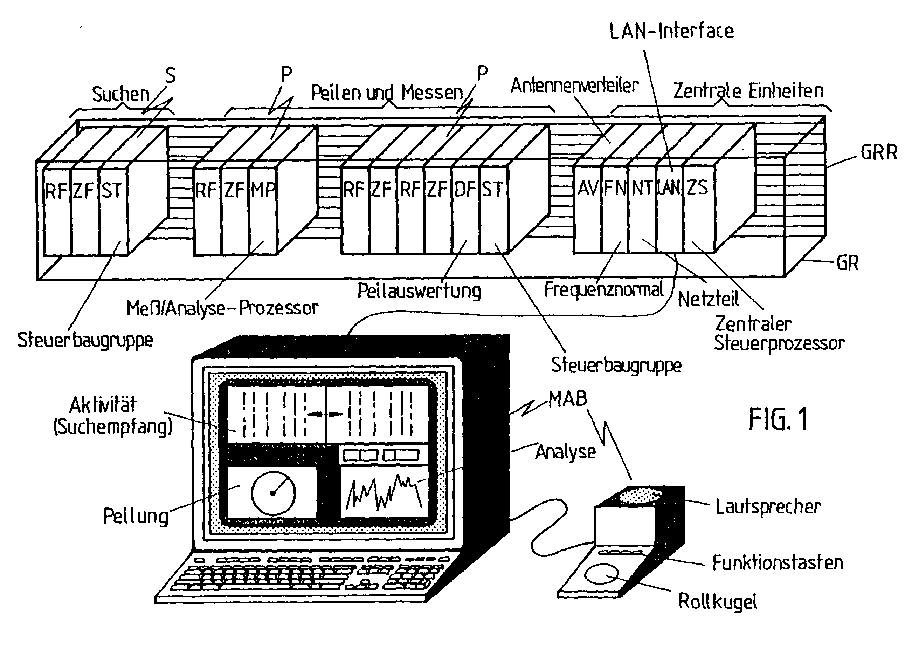

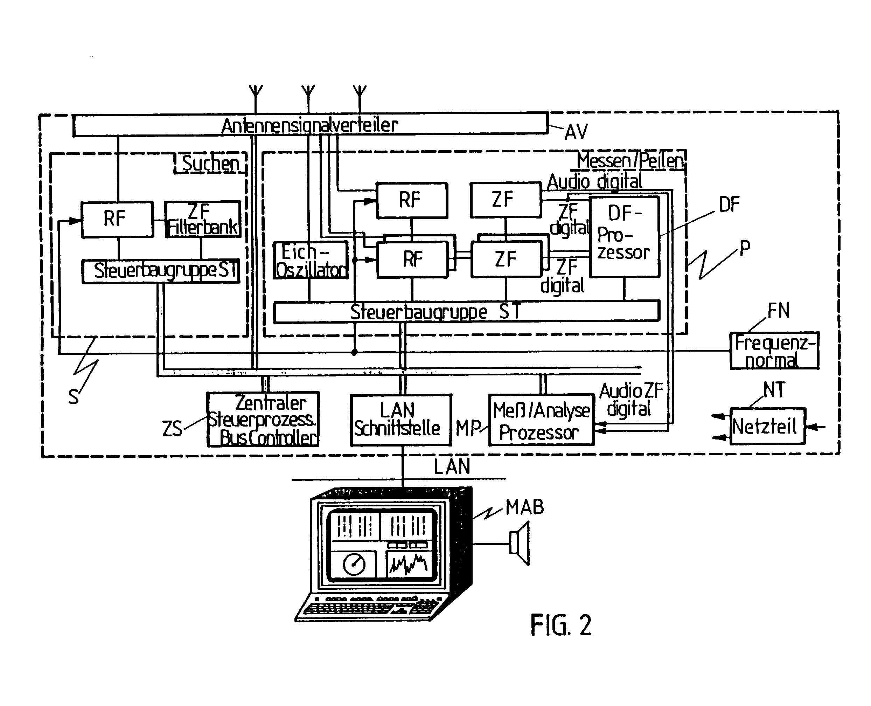

Im folgenden wird die Erfindung anhand der Figuren näher erläutert, die (beispielhaft) eine mögliche Gerätekonfiguration für die Systemfunktion "Suchen, Peilen, Messen und Inhaltsbewertung" zeigen, und zwar zum einen die Darstellung dieses Ausführungsbeispiels in perspektivischer Darstellung (FIG. 1) und zum anderen das entsprechende Blockschaltbild dieser Gerätekonfiguration (FIG. 2).

Wie FIG. 2 zeigt übernimmt die Funktion "Suchen" in diesem Ausführungsbeispiel ein Suchempfänger S, der im wesentlichen aus den Baugruppen: Hochfrequenzteil RF und Zwischenfrequenzteil/Filterbank ZF besteht, die durch eine Steuerbaugruppe ST miteinander verbunden sind (der prinzipielle Aufbau und die Funktionsweise des Suchempfängers bzw. des nachfolgend geschilderten Peilers bzw. Meß/Analyse-Empfängers sind an sich bekannt und brauchen daher nicht näher erläutert werden).

Die Funktion Messen/Peilen übernimmt in diesem Ausführungsbeispiel ein dreikanaliger Peiler P mit den Baugruppen: Hochfrequenzteil RF, Zwischenfrequenzteil/Filterbank ZF (jeweils eine Baugruppe pro Kanal), Peilauswerteeinheit DF sowie Meß-/Analyseeinheit MP. Ferner ist für Eichzwecke noch ein Eichoszillator vorgesehen, der ebenso wie die drei Empfangskanäle über Schalter an einen Antennensignalverteiler AV angeschlossen ist, der mit den Antennen des Systems verbunden ist.

Der Eichoszillator, die RF- und ZF-Baugruppen sowie die Peilauswerteeinheit DF sind ebenfalls über eine Steuerbaugruppe ST miteinander verbunden.

Die (digitalen) Audio- bzw. ZF-Ausgangssignale eines der drei Kanäle werden (vorzugsweise über einen schnellen DSP(Digitaler-Signal-Processor)Bus) zur Meß/Analyseeinheit MP übertragen und dort verarbeitet. Die ZF-Signale aller drei Kanäle werden außerdem zu der Peilauswerteeinheit DF übertragen; dort wird anhand dieser Signale das Peilergebnis ermittelt.

Die RF-Teile im Suchempfänger S und im Peiler P sind ferner mit einem gemeinsamen Frequenznormal FN verbunden. Alle Baugruppen sind (in an sich bekannter Weise) mit einem gemeinsamen Netzteil NT verbunden. Über eine LAN(Local-Area-Network)-Schnittstelle ist die Gerätekonfiguration an ein LAN angeschlossen, an dem unter anderem auch eine Multifunktions-Anzeige/Bedieneinheit MAB angeschlossen ist, die (beispielhaft) neben der parallelen Anzeige für die Aktivität (Suchempfang), für das Peilergebnis und die Analyse noch einen Lautsprecher sowie zur Kommandierung bzw. Befehlseingabe eine Rollkugel sowie Tastaturen enthält.

Der Suchempfänger S, der Peiler P, die Meß/Analyseeinheit MP, der Antennensignalverteiler AV und die LAN-Schnittstellen sind ferner über einen Gerätebus (z.B. einen VME-Bus) untereinander und mit einer zentralen Steuereinheit ZS verbunden.

Wie FIG. 1 zeigt, sind sämtliche Baugruppen als Moduln zum Einbau in standardisierte Gehäusesysteme ausgebildet, die in einem gemeinsamen Gehäuserahmen GR untergebracht sind. An der Rückwand GRR des Gehäuserahmens GR ist ein Großteil der busfähigen Verbindungsleitungen und -anschlüsse für die einzelnen Moduln angeordnet. Lediglich die Multifunktions-Anzeige/Bedieneinheit MAB ist in einem separaten Gehäuse untergebracht.

Über die Multifunktions-Anzeige/Bedieneinheit MAB werden die Befehle eingegeben bzw. die empfangenen und/oder ausgewerteten Signale zur Anzeige gebracht. Über die zentrale Steuereinheit ZS werden je nach gewünschter Systemfunktion die einzelnen Baugruppen zu Geräten (hier: Suchempfänger S, Peiler/Meßempfänger P) zusammengekoppelt und die zugehörigen Steuerbaugruppen ST mit den für die jeweilige Gerätefunktion erforderlichen Steuerprogrammen geladen.

Die von allen Geräten gemeinsamen benutzten Baugruppen: Antennensignalverteiler AV, Frequenznormal FN, Netzteil NT, LAN-Schnittstelle bilden dabei zusammen mit der zentralen Steuereinheit ZS einen separaten Geräteblock; ebenso verhält es sich mit den Baugruppen RF, ZF und ST für den Suchempfänger S bzw. mit den Baugruppen RF, ZF, DF und ST für den Peilempfänger P, wobei der gleichzeitig als Meßempfänger betriebene eine Kanal des Peilempfängers P zusammen mit der Meß/Analyseeinheit MP von den übrigen Baugruppen des Peilempfängers P räumlich separiert angeordnet ist.

Die Erfindung ist nicht auf das geschilderte Ausführungsbeispiel beschränkt, sondern vielmehr auf weitere übertragbar.

Neben der geschilderten Zusammenfassung verschiedener Einzelempfängerfunktionen zu Funktionskomplexen läßt sich mit diesem Ansatz auch die Leistungsfähigkeit einer Einzelfunktion steigern, wie z.B. die Erhöhung der Geschwindigkeit des Suchempfangs durch Kaskadierung preisgünstiger kleiner Empfängermoduln. Dadurch kann in vielen Anwendungsfällen die Anwendung von Baugruppen mit einer teueren Technologie vermieden werden.

In Verbindung mit der dynamischen Umparametrierung der Empfängerfunktionen durch Aktivierung oder Download verschiedener Betriebsprogramme können die Funktionen der Empfängermodule den jeweiligen betrieblichen Anforderungen angepaßt und dadurch optimal genutzt werden. Z.B. können die Empfängermoduln bei Einsatzbeginn vorwiegend für schnelle Suche und danach für Überwachung, Analyse oder Abhängeempfang konditioniert werden.

## Patentansprüche

1. Funkaufklärungssystem, bestehend aus mehreren Geräten, welche jeweils aus einer oder mehreren Baugruppen bestehen und je nach Systemfunktion zu unterschiedlichen Gerätekonfigurationen zusammenschaltbar sind, wobei jedes Gerät mit einer zentralen Steuereinheit verbunden ist, dadurch gekennzeichnet,
- daß die einzelnen Baugruppen (ZS, LAN, NT, FT, AV, ST, DF, MP, ZF, RF) als separate Moduln ausgebildet sind;
- daß zur Realisierung einer der Gerätekonfigurationen die zentrale Steuereinheit (ZS) die für die ausgewählte Gerätekonfiguration benötigten Baugruppen aus den vorhanden Baugruppen (ZS, LAN, NT, FT, AV, ST, DF, MP, ZF, RF) auswählt und zu den für die ausgewählte Gerätekonfiguration benötigten Geräten zusammenkoppelt;
- daß die zentrale Steuereinheit (ZS) den zusammengekoppelten Geräten jeweils eine Steuerbaugruppe (ST) zuordnet und diese mit einem der jeweiligen Gerätefunktion entsprechenden Steuerprogramm lädt.

2. Funkaufklärungssystem nach Anspruch 1, dadurch gekennzeichnet, daß von mehreren zusammengekoppelten Geräten gleichzeitig benötigte und nutzbare Baugruppen wie Frequenznormal (FN), Netzteil (NT) usw. jeweils nur einmal vorhanden sind.

3. Funkaufklärungssystem nach Anspruch 1 oder 2, dadurch gekennzeichnet, daß eine Multifunktions-Anzeige/Bedieneinheit (MAB) mit der zentralen Steuereinheit (ZS) verbunden ist.

4. Funkaufklärungssystem nach einem der vorhergehenden Ansprüche, dadurch gekennzeichnet, daß die Gehäuse der als separate Moduln ausgebildeten Baugruppen (ZS, LAN, NT, FT, AV, ST, DF, MP, ZF, RF) zum Einbau in standardisierte Gehäusesysteme geeignet sind und in einem gemeinsamen Gehäuserahmen (GR) angeordnet sind und daß zumindest ein Teil der Verbindungsleitungen und -anschlüsse zwischen den einzelnen Moduln an der Gehäuserahmen-Rückwand (GRR) angeordnet sind.

5. Funkaufklärungssystem nach Anspruch 4, dadurch gekennzeichnet, daß die Verbindungsleitungen zumindest für einen Teil der Signalebenen als busfähige Medien ausgebildet sind.

## Claims

1. Radio reconnaissance system consisting of several apparatus which each consist of one or more assemblies and are connectible together into different apparatus configurations according to the respective system function, wherein each apparatus is connected with a central control unit, characterised thereby
- that the individual assemblies (ZS, LAN, NT, FT, AV, ST, DF, MP, ZF, RF) are constructed as separate modules;
- that for the realisation of one of the apparatus configurations the central control unit (ZS) selects the assemblies, which are needed for the selected apparatus configuration, from the assemblies (ZS, LAN, NT, FT, AV, ST, DF, MP, ZF, RF) present and couples together the apparatus needed for the selected apparatus configuration;
- that the central control unit (ZS) assigns to the intercoupled apparatus a respective control assembly (ST) and loads this with a control program corresponding to the respective apparatus function.

2. Radio reconnaissance system according to claim 1, characterisd thereby that assemblies required and usable at the same time by several intercoupled apparatus, such as frequency standard (FN), mains part (NT), etc., are present each time only once.

3. Radio reconnaissance system according to claim 1 or 2, characterised thereby that a multifunction display/operating unit (MAB) is connected with the central control unit (ZS).

4. Radio reconnaissance system according to one of the preceding claims, characterised thereby that the housings of the assemblies (ZS, LAN, NT, FT, AV, ST, DF, MP, ZF, RF) constructed as separate modules are suitable for installation in standardised housing systems and are arranged in a common housing frame (GR) and that at least a part of the connecting lines and connections between the individual modules are arranged at the back wall (GRR) of the housing frame.

5. Radio reconnaissance system according to claim 4, characterised thereby that the connecting lines at least for a part of the signal planes are constructed as media capable of acting as a bus

## Revendications

1. Système de radiorepérage comprenant plusieurs appareils constitués chacun d'un ou de plusieurs sous-ensembles et susceptibles d'être connectés ensemble, suivant la fonction de système à assurer, en différentes configurations d'appareils, chaque appareil étant relié à une unité centrale de commande, caractérisé en ce
- que les différents sous-ensembles (ZS, RLE, NT, FT, AV, ST, DF, MP, FI, RF) sont réalisés comme des modules séparés;
- que, pour la réalisation d'une des configurations d'appareils, l'unité centrale de commande (ZS) sélectionne les sous-ensembles nécessaires à la configuration d'appareils choisie parmi les sous-ensembles présents (ZS, RLE, NT, FT, AV, ST, DF, MP, FI, RF) et les couple ensemble pour former les appareils nécessaires à la configuration d'appareils choisie; et
- que l'unité centrale de commande (ZS) coordonne chaque fois un sous-ensemble de commande (ST) aux appareils couplés ensemble et le charge avec un programme de commande correspondant à la fonction d'appareil coordonnée.

2. Système de radiorepérage selon la revendication 1, caractérisé en ce que des sous-ensembles simultanément nécessaires et utilisables, tels qu'étalon de fréquence FN, bloc d'alimentation NT, et ainsi de suite, de plusieurs appareils couplés ensemble, sont chacun présents en un exemplaire seulement.

3. Système de radiorepérage selon la revendication 1 ou 2, caractérisé en ce qu'une unité multifonctionnelle d'affichage/de commande (MAB) est connectée à l'unité centrale de commande (ZS).

4. Système de radiorepérage selon une des revendications précédentes, caractérisé en ce que les coffrets des sous-ensembles (ZS, RLE, NT, FT, AV, ST, DF, MP , FI, RF), réalisés comme des modules séparés, conviennent pour être montés dans des systèmes de coffrets standardisés et sont disposés dans une ossature formant une baie commune (GR), et qu'une partie au moins des lignes et connexions de liaison entre les différents modules sont disposées sur la paroi arrière (GRR) de la baie.

5. Système de radiorepérage selon la revendication 4, caractérisé en ce que les lignes de liaison pour une partie au moins des plans de signaux sont constituées par des supports réalisables sous forme de bus.
